Europäisches Patentamt

European Patent Office

Office européen des brevets

(19)

(11) Numéro de publication : **0 246 118 B1**

(12) # FASCICULE DE BREVET EUROPEEN

(45) Date de publication du fascicule du brevet :
**05.06.91 Bulletin 91/23**

(51) Int. Cl.⁵ : **B24D 3/06**

(21) Numéro de dépôt : **87400292.6**

(22) Date de dépôt : **09.02.87**

(54) **Produit abrasif diamanté thermostable et procédé de fabrication d'un tel produit.**

(30) Priorité : **16.05.86 FR 8607069**

(43) Date de publication de la demande :
**19.11.87 Bulletin 87/47**

(45) Mention de la délivrance du brevet :
**05.06.91 Bulletin 91/23**

(84) Etats contractants désignés :
**AT BE CH DE ES FR GB IT LI SE**

(56) Documents cités :
**EP-A- 0 003 915**
**EP-A- 0 116 403**
**FR-A- 1 316 155**
**FR-A- 2 285 213**

(56) Documents cités :
**GB-A- 436 430**
**GB-A- 2 006 733**
**US-A- 2 716 404**
**US-A- 4 241 135**

(73) Titulaire : **SOCIETE INDUSTRIELLE DE**
**COMBUSTIBLE NUCLEAIRE**
**4 rue du Radar**
**F-74008 Annecy (FR)**

(72) Inventeur : **Cerceau, Jean-Michel**
**22, rue A. Bouchayer**
**F-38130 Seyssinet (FR)**

(74) Mandataire : **Fort, Jacques et al**
**CABINET PLASSERAUD 84, rue d'Amsterdam**
**F-75009 Paris (FR)**

## Description

L'invention concerne les produits abrasifs du type comprenant une partie active constituée par un "compact" contenant des grains de diamant représentant plus de 80% en volume du compact, chaque grain étant lié directement à ses voisins pour présenter une structure polycristalline. Elle concerne également les produits du type compact constitués d'une structure polycristalline et d'un support dur et réfractaire solidaire du compact.

Le terme "compact" désigne un produit fritté constitué par des grains liés entre eux par des ponts, créés par diffusion de matière à l'état plastique, encore appelée pontage. Ce frittage en phase plastique est obtenu, avec des grains de diamant, à des pressions et des températures de l'ordre de grandeur des pressions et températures utilisées pour la synthèse de ces mêmes grains, que l'on peut diminuer en ajoutant au produit de départ des catalyseurs de conversion bien connus.

On connaît des compacts du type défini ci-dessus (US 3 239 321) obtenus à une température pouvant dépasser 1750°C, dans lesquels les vides du compact sont occupés par du catalyseur de conversion, tel que Co, Va, Ti, Zr, Cr, Si. On connaît par ailleurs des produits dans lesquels un compact est directement lié à un support de carbure métallique (carbure de tungstène en général). Ces produits ont l'inconvénient de se dégrader rapidement soit lorsque le frittage a été effectué en l'absence d'une quantité suffisante de grains de diamant, soit lorsque la partie active est portée à une température dépassant environ 700°C en raison, d'une part, des contraintes induites dans la matrice métallique par suite de la dilatation thermique de cette même matrice, d'autre part, de la tendance du diamant en contact avec le catalyseur à revenir à l'état de graphite lorsqu'il est porté à haute température sans être en même temps soumis à une pression élevée.

On peut améliorer la tenue du compact en température en éliminant le catalyseur par le procédé de lixiviation mentionné dans le brevet US 3 745 623 (Wentorf). Mais le compact résiduel est poreux et présente une surface spécifique très importante, de sorte que la durée de vie du compact est réduite par oxydation lorsqu'il est porté à température élevée.

On a encore proposé des produits abrasifs comportant un support en carbure de silicium et un composite de diamant polycristallin, non fritté car non soumis lors de la fabrication à des températures et pressions suffisantes pour permettre l'inter-croissance des grains de diamant entre eux, dans lesquels les vides entre grains du composite sont occupés par un composé de silicium et d'un métal tel que le nickel (brevet US 4 241 135). Ces produits présentent le désavantage d'une mauvaise résistance à l'abrasion du fait de l'absence de frittage.

On a également proposé (US-A-4 124 401) un produit abrasif composite comprenant : une masse de diamant polycristallin cimentée par un liant contenant du silicium ; un support en carbure dont la cohésion est assurée par du cobalt. Mais l'absence de catalyseur et de frittage lors de la fabrication de la masse diamantée empêche la formation de pontages directs entre les grains de diamant. On obtient non pas un compact fritté ayant un squelette de grande rigidité, mais un produit qu'on peut qualifier de cimenté par le liant. Un tel produit est appelé quelquefois "cémenté", suivant une terminologie dérivée de l'anglais.

De même, on connait des produits abrasifs comportant un support carbure de tungstène dont la cohésion est assurée par du cobalt, une barrière destinée à interdire le passage du cobalt dans le diamant et un composite de diamant polycristallin avec un liant Silicium-Rhénium (US 4 380 471).

Le frittage de ce produit est imparfait car, bien que les constituants soient soumis à des températures et pressions élevées, les temps utilisés, lors de la fabrication, ne permettent à la phase liante que de jouer un rôle de remplissage des vides entre les grains de diamant sans frittage de ceux-ci. De ce fait, ce produit présente une mauvaise tenue à l'abrasion.

On connaît également (EP-A-116 403) un compact constitué de grains de diamant représentant plus de 80% en volume du compact, les grains de diamant étant liés entre eux par pontages, réalisé par frittage direct de grains de diamant en la seule présence de silicium et de nickel. Ces compacts ont une mauvaise résistance à l'abrasion, probablement attribuable au fait que le catalyseur utilisé ne possède pas une mouillabilité satisfaisante. La mouillabilité du catalyseur est un facteur qui influence directement la réactivité de celui-ci vis-à-vis des grains de diamant. L'origine peut être un point de fusion insuffisamment bas ; on n'assure pas, aux températures et pressions de frittage habituelles, une quantité de pontages suffisante pour résister lors des opérations d'usinage.

On a encore proposé des produits abrasifs compacts réalisés par frittage de grains de diamant en présence d'une substance dure et thermostable qui n'est pas du diamant. Parmi ces substances, telles que définies dans le brevet FR-A-2 043 350, le bore, le titane, le silicium ou leurs composés entre autres ont été retenus. Cette solution représente un progrès sensible. Cependant la qualité du pontage reste souvent insuffisante pour assurer une bonne résistance aux chocs et aussi à l'abrasion.

On connaît encore (GB-A-2006733) un produit abrasif composite de diamant et d'une phase liante en moyenne partie, constituée de carbure de silicium mouillant les cristaux.

Ce produit peut être fabriqué par infiltration, dans les capillaires d'une masse compactée de cristaux de diamants, d'un alliage eutectique riche en silicium.

Des solutions proposées ci-dessus, il découle qu'à ce jour aucun produit abrasif compact ou composite, avec ou sans support solidaire, n'assure simultanément les qualités de thermostabilité, de résistance à l'abrasion et aux chocs souhaitables pour les abrasifs actuels.

L'invention vise à fournir un produit abrasif diamanté thermostable répondant mieux que ceux antérieurement connus aux exigences de la pratique, notamment en ce qu'il comporte un compact où les grains de diamant sont directement liés entre eux par pontages, en ce qu'il a une surface spécifique faible, une résistance à l'abrasion et aux chocs améliorée. Elle concerne également un produit de ce type susceptible d'être fixé par brasage.

Dans ce but, l'invention propose notamment un produit.

Le produit comporte avantageusement le compact lié par une interface métallurgique à un substrat en métal réfractaire.

Les grains de diamant représentent 80 à 95% en volume du compact, avantageusement 80 à 90%. Les teneurs en masse de silicium et de Fe-Ni de la phase liante sont avantageusement dans un rapport compris entre 40/60 et 90/10.

Le substrat de métal réfractaire (tungstène ou molybdène en général) peut être lui-même porté par un support de carbure de tungstène ou de matériau céramique. Une barrière de diffusion peut être placée entre le substrat métallique et le compact de manière à accommoder les contraintes induites entre compact et support par le retrait dû au frittage des grains de diamant. Cette barrière participe à la liaison métallurgique, peut être très mince et est constituée de diamant et de poudre de carbure de tungstène.

Une mince couche de nickel, obtenue par revêtement du substrat métallique, participe également à la liaison intermétallique et constitue ainsi une source supplémentaire d'agent catalyseur.

Dans la pratique, on donnera généralement au substrat métallique, s'il est prévu, une épaisseur de quelques dixièmes à plusieurs millimètres ; une épaisseur de 0,25 mm est généralement satisfaisante.

L'invention propose également un procédé de fabrication d'un produit abrasif suivant lequel : on place une couche de poudre de diamant contenant de la poudre de fer et de nickel sur un substrat en métal réfractaire lui-même au contact d'un support en carbure de tungstène. Sur ladite couche est placé soit un disque, soit fine couche de poudre de silicium ou de nickel-titane ; on place une cellule contenant l'empilement ainsi réalisé dans une presse permettant de porter l'empilement à une température dépassant 1200°C, à une pression dépassant 45 kbars, les pression et température étant choisies pour correspondre à la zone de stabilité du diamant ; et on maintient la cellule en température et en pression pendant une durée suffisante pour provoquer le frittage en phase plastique des grains de diamant entre eux.

L'invention sera mieux comprise à la lecture de la description qui suit de modes particuliers d'exécution de celle-ci, donnés à titre d'exemples non limitatifs. La description se réfère aux dessins qui l'accompagnent, dans lesquels :

– la Figure 1 montre la constitution générale d'un premier produit abrasif selon l'invention, l'échelle n'étant pas respectée sur cette Figure pour plus de clarté ;

– la Figure 2 montre un produit composite constituant une variante de celui de Figure 1 ;

– les Figures 3 et 4 sont des schémas de principe montrant respectivement le montage d'un produit abrasif démuni de support carbure sur un outil et la fabrication d'un outil par moulage du corps sur des produits abrasifs.

– la Figure 5 montre schématiquement la découpe d'éléments abrasifs dans un compact suivant l'invention.

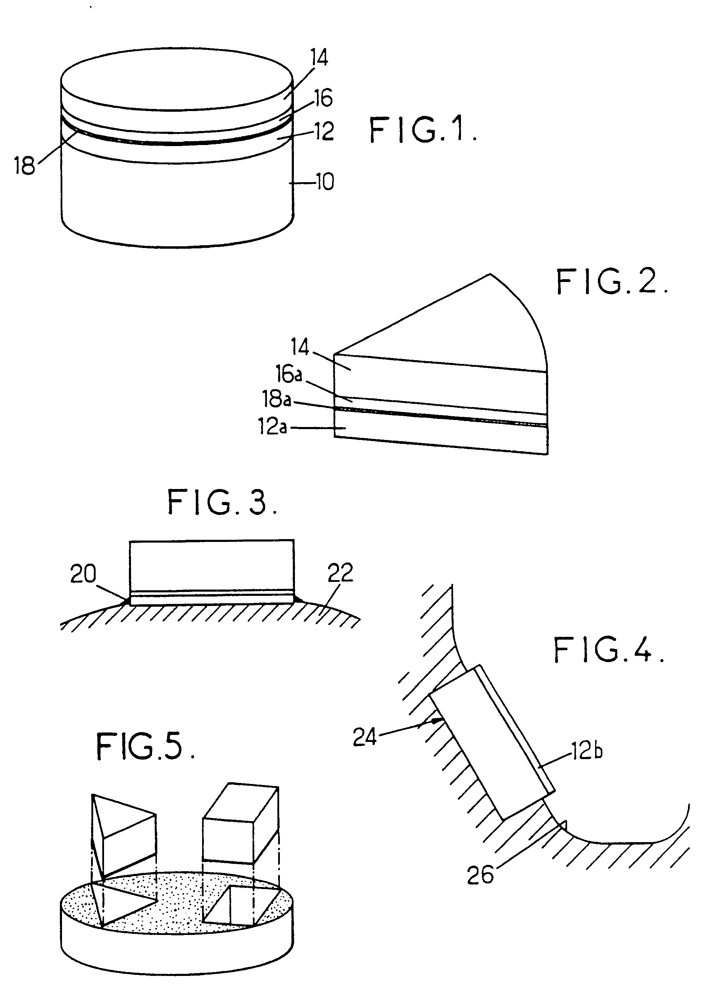

Le produit montré en Figure 1 comporte un support 10 en carbure réfractaire fritté contenant du cobalt comme liant de frittage. Ce support, dont l'épaisseur peut varier selon l'application envisagée, est solidaire d'un substrat 12 de métal réfractaire qui sera généralement du tungstène ou du molybdène à l'état métallique. Le substrat 12 est lié à un compact 14 de diamant polycristallin par une liaison métallique qui peut contenir un substrat métallique nickelé sur l'une des deux faces ou les deux faces 18 et une barrière de diffusion 16 contenant du diamant, et du carbure de tungstène.

Le compact 14 comporte 80 à 95% en volume de grains de diamant liés entre eux directement par pontages et formant ainsi une partie abrasive. Les vides du diamant sont occupés par une phase liante démunie de cobalt et qui comporte, dans un mode avantageux de réalisation, les composés résultant de la transformation à hautes pressions et hautes températures, en présence des grains de diamant, du silicium et du fer-nickel.

La présence simultanée de ces éléments, qui sont en majeure partie à l'état d'alliage (le terme "alliage" étant pris dans un sens large et comme désignant toute solution solide ou combinaison d'éléments dont au moins un est métallique), se traduit par des propriétés très différentes de celles que l'on obtiendrait avec la présence d'un seul.

Il semble bien que le silicium présent dans la matrice intergranulaire se combine sous deux formes, celles-ci étant en plus ou moins grande proportion suivant la surface des grains de diamant laissée libre après la formation des pontages. Ainsi le silicium, très réactif vis-à-vis du carbone aux pressions et aux températures nécessaires au frittage par écoulement visqueux, formera une phase céramique du type carbure de silicium en surface des grains de diamant. Le fer et le nickel ne restent pas sous forme métallique et se combinent au silicium et à une fraction faible du diamant pour former des composés intermédiaires.

Le fer allié au nickel permet d'obtenir un alliage à bas point de fusion et d'augmenter ainsi sa mouillabilité, donc son effet catalytique, c'est-à-dire sa réactivité vis-à-vis du carbone aux températures et pression de travail.

A température de frittage identique on obtient un alliage dont la mouillabilité est meilleure que celle du nickel seul et qui permet de réaliser un meilleur pontage des grains de diamant. En outre apparaissent des phases carburées du type $Fe_x Si_y C_z$ qui confèrent au produit une dureté accrue.

Le silicium apporte de son côté des qualités de thermostabilité à l'abrasif.

Si le titane est choisi comme élément durcissant de la matrice intergranulaire, le nickel permet de réduire considérablement le point de fusion et favorise ainsi la diffusion entre les grains de diamant. La formation de carbure de titane est accompagnée, lorsque le titane est en sursaturation, de la formation et de la précipitation au refroidissement d'un composé du type $Ti_x Ni_y$ dont la formule stoechiométrique et la quantité sont fonction des concentrations relatives de nickel et de titane résiduel. L'effet de catalyse inverse que présente le nickel à l'état métallique est écarté du fait de sa combinaison avec le titane.

Les résultats ci-dessus sont notamment atteint avec une composition dans laquelle les teneurs en poids de silicium et de fer-nickel sont dans un rapport allant de 40/60 à 90/10 (et en règle générale de 40/60 à 80/20) ou dans laquelle les teneurs en poids de titane et de nickel sont dans un rapport allant de 40/60 à 80/20.

Dans un exemple avantageux, le rapport fer-/nickel sera compris entre 95/5 et 30/70 en poids et sera avantageusement compris entre 60/40 et 40/60.

Le produit montré en Figure 1 peut être fabriqué de la façon suivante : dans une cellule de réaction, on place successivement le support de carbure de tungstène 10, puis le substrat 12, constitué par un disque de tungstène de 0,25 mm d'épaisseur. Une couche de nickel de faible épaisseur, déposée par voie électrochimique, facilite la liaison métallurgique entre substrat de tungstène et support de carbure.

Sur le disque est placée une couche mince (0,25 mm par exemple) d'un mélange pulvérulent destiné à donner naissance à une barrière de diffusion, constituée de poudre de carbure de tungstène et de diamant. La teneur en diamant de cette couche peut notamment être comprise entre 30 et 70% en volume.

Le nickel déposé sur ce substrat est aussi prévu pour diffuser vers une masse de poudre destinée à constituer le compact lors du séjour en presse chauffante. Cette poudre, placée sur la barrière de diffusion, est constituée de grains de diamant dont la granulométrie est choisie en fonction de l'application envisagée sur le produit. Elle peut être mélangée à de la poudre de fer-nickel. La granulométrie sera généralement plus forte pour des produits de forage que pour des produits d'usinage : par exemple, pour des produits d'usinage de métaux, on pourra adopter une poudre de diamant dont la taille moyenne des grains se situera entre 0 et 30 microns et, pour des produits de forage, une taille moyenne de 20 à 100 microns. Dans une variante de réalisation, l'apport de Fe-Ni est assuré par un disque solide ou une couche de métal pulvérulent placé sur le diamant.

Enfin, l'ensemble est recouvert d'une pellicule de silicium ou de titane-nickel en poudre ou sous forme de disque solide (silicium monocristallin, disque métallique préréagi de nickel-titane)... destinée à diffuser en quantité juste suffisante dans le diamant et à se combiner, au moins partiellement, avec le fer et le nickel déjà présents lorsqu'ils sont mélangés à la poudre de diamant ou qui s'infiltrent à travers le diamant à partir de la couche d'apport de Fer-Nickel.

La cellule est ensuite fermée par un couvercle et mise en place dans une presse qui peut être de l'un des types connus (presse à ceinture, presse tétrahédrique ou presse hexahédrique). L'ensemble est porté à une pression dépassant 45 kbars, puis chauffé à une température qui sera habituellement de 1200 à 1300°C pendant la durée requise pour provoquer la formation d'un squelette de diamant polycristallin. On laisse ensuite la température retomber, on ouvre la presse et on obtient un produit qui peut être ensuite mis en forme avant usage.

Dans ce produit, le compact contient un squelette de diamant dont les pores sont remplis par une phase céramique homogène, thermostable et dure constituée par :

le silicium, allié au fer et au nickel,

le carbure de silicium et le carbure de fersilicium;

(ou le titane allié au nickel et le carbure de titane suivant l'élément choisi).

des phases obtenues à hautes températures, dont l'analyse spectrographique n'a pu déterminer la nature complète,

Le produit est thermostable. Les risques de décollement ou d'arcure lors des variations de température, notamment lors des travaux d'usinage, sont réduits du fait du faible coefficient de dilatation thermique de la matrice et de la protection fournie par la phase céramique en surface des grains.

Dans une variante de réalisation, le support en carbure de tungstène est remplacé par un support céramique en un autre matériau, tel que le carbure de silicium, qui est ultérieurement détruit, par exemple par attaque chimique. Cette solution présente l'intérêt de fournir un produit abrasif de faible épaisseur qui peut être brasé sur un outil en acier, une épaisseur de 0,25 mm de tungstène étant suffisante pour ce résultat.

Dans une autre variante de réalisation, le substrat de tungstène nickelé est séparé du support en carbure de tungstène par un ou plusieurs disques de zirconium. La séparation de la partie portée par le tungstène et du carbure de tungstène s'effectuera alors, après le passage sous presse, dans un bain d'acide fluorhydrique chaud. Le produit obtenu est donc dans ce cas un compact de diamant thermostable sur un support mince de tungstène, utilisable comme outil brasable de coupe des métaux ou de forage des roches.

Dans une autre variante encore de réalisation, montrée en Figure 2, le produit abrasif est directement constitué par empilement d'un substrat 12a en tungstène ou molybdène présentant un revêtement superficiel 18a de nickel, d'une barrière de diffusion 16a et d'un compact de diamant 14. Le produit abrasif peut directement être moulé en forme définitive mais, plus fréquemment, il sera obtenu par découpe au laser d'une ébauche cylindrique.

Un produit du genre montré en Figure 2 peut être utilisé par serrage sur un outil ou, comme montré schématiquement en Figure 3, il peut être brasé en 20 sur un corps d'outil 22, par exemple en acier.

Une autre solution encore consiste à placer des produits abrasifs à substrat tungstène ou molybdène et à compact contenant du fer-nickel et du silicium dans un moule qui sert ensuite à réaliser, par infiltration suivant les techniques bien connues de la fabrication des produits diamantés à une température voisine de 1200°C, une tête de coupe, par exemple une tête de forage pétrolier. La Figure 4 montre un tel produit 24, comportant un substrat 12b en W ou Mo, emboîté dans une poche prévue à cet effet dans la paroi interne d'un moule d'infiltration 26.

Enfin des produits abrasifs sans substrat ni support peuvent être réalisés, puis des éléments peuvent y être découpés au laser comme indiqué sur la Figure 5.

On donnera maintenant quelques exemples chiffrés de réalisation, étant entendu qu'ils ne sont nullement limitatifs et n'ont qu'un rôle d'illustration.

## Exemple 1

Un ensemble de grains de diamant dont la répartition granulométrique se situe entre 10 et 60 microns est mélangé intimement à un mélange de nickel et de fer à 50% en poids de fer, la quantité de Fe-Ni représentant 3,2% en poids du total. Au fond d'une coupelle en molybdène on place un disque de silicium de 0,25 mm d'épaisseur, représentant 20% en poids de la masse de diamant contenant du Fe-Ni dont il est ensuite recouvert.

Une barrière de diffusion contenant 50% en volume de grains de carbure de tungstène, 50% en volume de grains de diamant de taille équivalente à celle utilisée pour la réalisation de la couche active précédente est placée sur la couche de diamant. Le tout est alors recouvert d'un disque de tungstène de 0,25 mm d'épaisseur plaqué d'une couche fine de nickel sur ses deux faces et s'ajustant parfaitement au diamètre intérieur de la coupelle de molybdène. Cette dernière est sertie sur un support de carbure de tungstène de telle façon que ce dernier soit en contact avec le disque de tungstène et réalise un ensemble compact qu'on place dans une cellule de transmission de pression et de température.

Cette cellule est soumise, par l'intermédiaire des six enclumes d'une presse cubique, à des pressions voisines de 60 000 bars et des températures de l'ordre de 1500°C pendant un cycle thermique de 3 minutes environ. Le produit obtenu est ensuite mis en forme par rodage et rectification de manière à obtenir un cylindre ; le silicium non infiltré est éliminé lors de ces opérations de finition.

Celui-ci est alors essayé en tournage à sec d'un barreau de granit dans les conditions suivantes.
Vitesse de coupe = 330 m/mm
Profondeur de coupe = 0,5 mm
Avance = 0,7 mm/tour

Un produit du commerce (catalyseur cobalt et support carbure de tungstène) testé dans les mêmes conditions présente une usure pratiquement double de celle constatée sur le produit de l'invention. A titre indicatif, dans ces conditions sévères, le produit présente, après usinage d'un volume de 430 cm$^3$, une usure en dépouille de 0,45 mm tandis que le produit du commerce présente une usure en dépouille de 0,7 mm.

A titre d'essai de résistance, il est ensuite placé dans un four à 700°C sous atmosphère réductrice pour subir un cyclage thermique d'une durée totale de 5 heures comprenant une montée en température de 700 à 1200°C pendant 1h30, un refroidissement lent jusqu'à 700°C et une trempe à l'air.

Après ce traitement, l'outil présente encore les mêmes performances d'usinage que celles antérieurement mesurées. Le produit du commerce quant à lui ne supporte pas de traitement thermique supérieur à 750°C.

## Exemple 1 bis

Les mêmes opérations que dans le cas de l'exemple 1 ont été effectuées mais en remplaçant la couche de diamant mélangée à du Fe-Ni par une couche de diamant recouverte par une couche (solide ou pulvérulente) de Fe-Ni. La proportion métal catalyseur/diamant est conservée (3,2%).

Le produit obtenu est équivalent à celui de l'exemple 1.

## Exemple 2 :

On constitue un mélange identique à celui de l'exemple 1, constitué de :
96,8% en poids de grains de diamant,

3,2% en poids d'un mélange de poudres de fer et de nickel, à 50% en poids de fer.

Ce mélange est placé sur un disque en silicium représentant 10% de la masse du mélange dans une coupelle en molybdène et la cellule ainsi constituée est soumise aux mêmes températures et pressions que dans le cas de l'exemple 1.

Le produit a été ensuite soumis à des essais d'usure et des essais de résistance aux chocs.

C'est ainsi que dans des conditions de tests identiques à celles de l'exemple 1, mais avec une profondeur de coupe de 0,25 mm et pour un volume usiné de 220 cm³, l'abrasif de l'invention présente un volume d'usure en dépouille de 0,28 mm alors qu'un abrasif du commerce (compact avec liant Si) présente une usure en dépouille de 0,46 mm.

## Exemple 3

Les mêmes opérations que dans le cas de l'exemple 2 ont été effectuées, mais le disque unique de silicium a été remplacé par deux disques de 0,25 mm d'épaisseur placés chacun d'un côté du mélange diamant-fer-nickel.

Les résultats d'essai ont été très comparables à ceux de l'exemple 2.

## Exemple 4

Un ensemble de grains de diamant dont la répartition granulométrique se situe entre 10 et 60 microns est mélangé intimement à 3,2% de nickel et de fer en poids. Le nickel et le fer se présentent sous forme d'un mélange de poudres avec un rapport Fe/Ni de 60/40 en poids.

Au fond d'une coupelle en molybdène est placé un disque de silicium de 0,25 mm d'épaisseur représentant 15% en poids de la masse de diamant dont il est ensuite recouvert.

Une barrière de diffusion contenant 50% en volume de grains de carbure de tungstène, 50% en volume de grains de diamant de taille équivalente à celle utilisée pour la réalisation de la couche active précédente est placée sur la couche de diamant. Le tout est alors recouvert d'un disque de molybdène de 0,25 mm d'épaisseur plaqué d'une couche de nickel de quelques microns sur ses deux faces et s'ajustant parfaitement au diamètre intérieur de la coupelle de molybdène. Cette dernière est sertie sur un support de carbure de tungstène de telle façon qu'il soit en contact avec le disque de molybdène et réalise un ensemble compact qu'on place dans une cellule de transmission de pression et de température.

Cette cellule est soumise aux mêmes cycles de pression et de température que la cellule de l'Exemple 1.

Les résultats obtenus ont été très similaires à ceux des exemples précédents.

## Exemple 5

Un ensemble de grains de diamant dont la répartition granulométrique se situe entre 0 et 20 microns est mélangé intimement à 4,1% de fer-nickel en poids. Au fond d'une coupelle en molybdène est placé un disque de silicium de 0,25 mm d'épaisseur représentant 15% en poids de la masse de diamant dont il est recouvert. Une barrière de diffusion contenant 50% en volume de grains de carbure de tungstène, 50% en volume de grains de diamant de taille équivalente à celle utilisée pour la réalisation de la couche active précédente est placée sur la couche de diamant. Le tout est alors recouvert d'un disque de tungstène de 0,25 mm d'épaisseur plaqué d'une couche fine de nickel sur la face en contact avec la barrière de diffusion et s'ajustant parfaitement au diamètre intérieur de la coupelle de molybdène. On place ensuite trois disques de zirconium ayant chacun une épaisseur de l'ordre du dixième de millimètre sur le disque de tungstène et on les recouvre d'un support en carbure de tungstène. On place l'ensemble compact ainsi réalisé dans une cellule de transmission de pression et de température.

Cette cellule est soumise aux mêmes cycles de pression et de température que la cellule des exemples précédents.

Le cylindre obtenu par rectification est placé dans un bain d'acide fluorhydrique chaud pendant quelques minutes pour dissoudre les disques de zirconium et séparer ainsi le support en carbure de la couche active fixée au substrat de tungstène. Le substrat en tungstène peut alors être rodé de manière à obtenir un support de brasage plan. Des formes normalisées peuvent être obtenues par découpe à l'aide d'un faisceau laser focalisé, puis brasées à hautes températures sur des corps d'outils, pour obtenir une fixation à haute résistance mécanique.

## Exemple 6

Les mêmes opérations que dans le cas de l'exemple 1 ont été effectuées, mais en remplaçant le silicium par du titane-nickel et le mélange Ni-Fe par de la poudre de nickel. Le nickel représentait 2,9% en poids du mélange diamant-nickel, tandis que le titane-nickel était sous forme d'un disque métallique de 0,13 mm d'épaisseur.

## Revendications

1. Produit abrasif comprenant un compact (14) constitué de grains de diamant représentant plus de 80% en volume du compact, chaque grain étant lié directement à ses voisins pour présenter une structure polycristalline et les vides entre grains de diamant étant occupés par une phase liante contenant, d'une part, du silicium, d'autre part, du fer et du nickel, le silicium et le fer-nickel étant alliés,

2. Produit selon la revendication 1, caractérisé en ce que le compact est lié par une interface métallurgique à un substrat (12) en métal réfractaire.

3. Produit abrasif comprenant un compact (14) constitué de grains de diamant représentant plus de 80% en volume du compact, chaque grain étant lié directement à ses voisins pour présenter une structure pclycristalline, et d'un substrat dur et réfractaire solidaire du compact, les vides entre grains de diamant étant occupés par une phase liante contenant soit du silicium, du fer et du nickel, soit du titane et du nickel, le silicium (ou le titane) et le fer-nickel (ou le nickel) étant alliés, le compact étant lié par une interface métallurgique au substrat (12) en métal réfractaire.

4. Produit selon la revendication 3, caractérisé en ce que le métal réfractaire est le tungstène ou le molybdène.

5. Produit selon l'une quelconque des revendications 1 à 4, caractérisé en ce que le diamant représente 80 à 95% en volume du compact, avantageusement 80 à 90%.

6. Produit selon l'une quelconque des revendications 1 à 5, caractérisé en ce que les teneurs en masse de silicium d'une part, de nickel et de fer d'autre part, dans la phase liante sont dans un rapport Si/Ni + Fe compris entre 40/60 et 90/10.

7. Produit selon l'une quelconque des revendications précédentes, caractérisé en ce que les teneurs en masse de nickel et de fer sont dans un rapport compris entre 5/95 et 70/30 et avantageusement dans un rapport compris entre 40/60 et 60/40.

8. Produit selon la revendication 3, caractérisé en ce que les teneurs en masse de titane et de nickel de la phase liante sont dans un rapport compris entre 40/60 et 80/20.

9. Produit selon la revendication 2, 3 ou 8, caractérisé en ce que le substrat de métal réfractaire est porté par un support de carbure de tungstène ou de matériau céramique.

10. Produit selon la revendication 9, caractérisé en ce que le substrat est nickelé.

11. Produit selon la revendication 10, caractérisé en ce qu'une barrière de diffusion est placée entre le substrat métallique nickelé et le compact.

12. Produit selon la revendication 11, caractérisé en ce que la barrière de diffusion est constituée de diamant et de poudre de carbure n'incorporant pas de cobalt.

13. Procédé de fabrication d'un produit abrasif, caractérisé en ce que : on place une couche de poudre de diamant mélangée à de la poudre de nickel et de fer, puis du silicium sous forme d'un disque ou d'une fine couche de poudre dans une cellule ; on porte la cellule contenant l'empilement ainsi réalisé à une température dépassant 1200°C sous une pression dépassant 45 kbars dans une presse, les pression et température étant choisies pour correspondre à la zone de stabilité du diamant ; et on maintient la cellule en température et en pression pendant une durée suffisante pour provoquer le frittage en phase plastique des grains de diamant entre eux.

14. Procédé de fabrication d'un produit abrasif, caractérisé en ce que : on place une couche de poudre de diamant contenant de la poudre de nickel sur un substrat en métal réfractaire lui-même au contact d'un support en carbure de tungstène ; on place, sur ladite couche, du nickel-titane sous forme d'un disque ou d'une fine couche de poudre ; on place une cellule contenant l'empilement ainsi réalisé dans une presse permettant de porter l'empilement à une température dépassant 1200°C à une pression dépassant 45 kbars, les pression et température étant choisies pour correspondre à la zone de stabilité du diamant ; et on maintient la cellule en température et en pression pendant une durée suffisante pour provoquer le frittage en phase plastique des grains de diamant entre eux.

## Ansprüche

1. Schleifkörper mit einem Preßling (14) aus Diamantkörnern, die mehr als 80 Vol.-% des Preßlings darstellen, wobei jedes Korn direkt mit seinen Nachbarn verbunden ist, um eine polykristalline Struktur zu bilden, und wobei die Zwischenräume zwischen den Diamantkörnern von einer Bindemittelphase eingenommen sind, die einerseits Silizium und anderseits Eisen und Nickel enthält, wobei das Silizium und das Eisen-Nickel legiert sind.

2. Körper nach Anspruch 1, dadurch gekennzeichnet, daß der Preßling über eine metallurgische Zwischenlage mit einem Substrat (12) aus hitzebeständigem Metall verbunden ist.

3. Schleifkörper mit einem Preßling (14) aus Diamantkörnern, die mehr als 80 Vol.-% des Preßlings darstellen, wobei jedes Korn direkt mit seinen Nachbarn verbunden ist, um eine polykristalline Struktur zu bilden, und aus einem harten, hitzebeständigen und mit dem Preßling verbundenen Substrat, wobei die Zwischenräume zwischen den Diamantkörnern von einer Bindemittelphase eingenommen sind, die entweder Silizium, Eisen und Nickel, oder Titan und Nickel enthält, wobei das Silizium (oder das Titan) und das Eisen-Nickel (oder das Nickel) legiert sind und wobei der Preßling über eine metallurgische Zwischenlage mit einem Substrat (12) aus hitzebeständigem Metall verbunden ist.

4. Körper nach Anspruch 3, dadurch gekennzeichnet, daß das hitzebeständige Metall Wolfram oder Molybdän ist.

5. Körper nach einem der Ansprüche 1 bis 4, dadurch gekennzeichnet, daß der Diamant 80 bis 95 Vol.-% des Preßlings darstellt, vorzugsweise 80 bis 90 Vol.-%.

6. Körper nach einem der Ansprüche 1 bis 5, dadurch gekennzeichnet, daß die Massenanteile von Silizium einerseits und von Nickel und Eisen anderseits In der Bindemittelphase in einem Verhältnis Si/Ni + Fe zwischen 40/60 und 90/10 sind.

7. Körper nach einem der vorhergehenden Ansprüche, dadurch gekennzeichnet, daß die Massenanteile von Nickel und Eisen in einem Verhältnis zwischen 5/95 und 70/30, vorzugsweise in einem Verhältnis zwischen 40/60 und 60/40 sind.

8. Körper nach Anspruch 3, dadurch gekennzeichnet, daß die Massenanteile von Titan und Nickel der Bindemittelphase in einem Verhältnis zwischen 40/60 und 80/20 sind.

9. Körper nach Anspruch 2, 3 oder 8, dadurch gekennzeichnet, daß das Substrat aus hitzebeständigem Metall von einem Träger aus Wolframkarbid oder aus einem keramischen Material getragen ist.

10. Körper nach Anspruch 9, dadurch gekennzeichnet, daß das Substrat vernickelt ist.

11. Körper nach Anspruch 10, dadurch gekennzeichnet, daß zwischen dem vernickelten metallischen Substrat und dem Preßling eine Diffusionsbarriere angeordnet ist.

12. Körper nach Anspruch 11, dadurch gekennzeichnet, daß die Diffusionsbarriere aus Diamant und Karbidpulver gebildet ist, welches kein Kobalt enthält.

13. Verfahren zum Herstellen eines Schleifkörpers, gekennzeichnet durch : eine Schicht Diamantpulver vermischt mit Nickel- und Eisenpulver und anschließend Silizium in Form einer Scheibe oder einer dünnen Pulverschicht werden in eine Kammer eingebracht ; die den derart gebildeten Stapel enthaltende Kammer wird auf eine Temperatur von über 1200°C bei einem Druck von über 45 kbar in einer Presse gebracht, wobei der Druck und die Temperatur so gewählt werden, daß sie dem Stabilitätsbereich von Diamant entsprechen ; die Kammer wird über eine ausreichende Zeit auf Temperatur und Druck gehalten, um das Sintern der Diamantkörner innerhalb der plastischen Phase zu bewirken.

14. Verfahren zum Herstellen eines Schleifkörpers, gekennzeichnet durch : eine Schicht Nickelpulver enthaltendes Diamantpulver wird auf ein Substrat aus hitzebeständigem Metall gebracht, welches seinerseits mit einem Träger aus Wolframkarbid in Berührung steht ; auf diese Schicht wird Nickel-Titan in Form einer Scheibe oder einer dünnen Pulverschicht aufgebracht ; eine den derart gebildeten Stapel enthaltende Kammer wird in eine Presse gebracht, die den Stapel auf eine Temperatur von über 1200°C bei einem Druck von über 45 kbar bringt, wobei der Druck und die Temperatur so gewählt werden, daß sie dem Stabilitätsbereich von Diamant entsprechen ; und die Kammer wird über eine ausreichende Zeit auf Temperatur und Druck gehalten, um das Sintern der Diamantkörner innerhalb der plastischen Phase zu bewirken.

## Claims

1. Abrasive product comprising a compact (14) constituted of diamond particles present in an amount of more than 80% by volume of the compact, each particle being directly bonded to its neighbours so as to form a polycrystalline structure, the voids being said diamond particles being filed with a binder phase containing, on the one hand, silicon, on the other hand, iron and nickel, the silicon and iron-nickel being alloyed.

2. Product according to claim 1, characterized in that the compact is bonded by a metallurgical interface to a refractory metal substrate (12).

3. Abrasive product comprising a compact (14) constituted of diamond particles present in an amount of more than 80% by volume of the compact, each particle being directly bonded to its neighbours so as to form a polycrystalline structure, and a refractory hard substrate bonded to the compact, the voids between diamond particles being filled with a binder phase containing either silicon, iron and nickel, or titanium and nickel, the silicon (or titanium) and the iron-nickel (or nickel) being alloyed, the compact being bonded by a metallurgical interface with the refractory metal substrate (12).

4. Product according to claim 3, characterized in that the refractory metal is tungsten or molybdenum.

5. Abrasive product according to any one of claims 1-4, characterized in that diamond represents 80% to 95% by volume of the compact, advantageously 80% to 90%.

6. Product according to any one of claims 1-5, characterized in that the contents per weight of silicon on the one hand, nickel and iron on the other hand, in the binder phase are in a Si/Ni-Fe ratio comprised between 40/60 and 90/10.

7. Product according to any one of the preceding claims, characterized in that the weight contents of nickel and iron are in a ratio comprised between 5/95 and 70/30 and advantageously in a ratio comprised between 40/60 and 60/40.

8. Product according to claim 3, characterized in that the weight contents of titanium and nickel of the binder phase are in a ratio comprised between 40/60 and 80/20.

9. Product according to claim 2, 3 or 8, characterized in that the refractory metal substrate is carried by a support of tungsten carbide or ceramic material.

10. Product according to claim 9,
characterized in that the substrate is nickel-plated.

11. Product according to claim 10,
characterized in that a diffusion barrier is placed between the nickel-plated substrate and the compact.

12. Product according to claim 11,
characterized in that the diffusion barrier consists of diamond and carbide powder and is devoid of cobalt.

13. A method of manufacturing an abrasive product,
characterized by : placing a layer of diamond particles mixed with nickel and iron powder then silicon as a disk or a thin layer of powder in a cell ; bringing the cell containing the stack so formed to a temperature exceeding 1200°C under a pressure exceeding 45 kbars in a press, the pressure and temperature being selected within the zone of stability of diamond and maintaining the temperature and pressure of the cell for a time sufficient for causing mutual plastic deformation sintering of the diamond particles.

14. A method of manufacturing an abrasive product,
characterized by : placing a layer of diamond particles containing nickel powder on a substrate of refractory metal which is in contact with a tungsten carbide support ; placing, on said layer, nickel-titanium as a disk or a thin powder layer ; placing a cell containing the stack so formed in a press for bringing the stack to a temperature exceeding 1200°C under a pressure exceeding 45 kbars, the pressure and temperature being selected within the zone of stability of diamond; and maintaining the cell in temperature and pressure for a time sufficient for causing plastic deformation sintering of the diamond particles mutually.

FIG.1.

FIG.2.

FIG.3.

FIG.5.

FIG.4.